# EUROPEAN PATENT SPECIFICATION

(11) **EP 2 790 484 B1**
(45) Date of publication and mention of the grant of the patent: **08.06.2016**
(21) Application number: 12775010.7
(22) Date of filing: 16.10.2012
(51) Int. Cl.: A01B 59/043, A01B 59/06

(54) **LINK HOLDER**
BEZUG HALTER AUF EINEM FAHRZEUG ODER EINER MASCHINE
SUPPORT LIAISON SUR UN VEHICULE OU MACHINE

(30) Priority: 15.12.2011 GB 201121552; 31.01.2012 GB 201201667
(43) Date of publication of application: 22.10.2014
(73) Proprietor: AGCO International GmbH, 8212 Neuhausen am Rheinfall (CH)
(72) Inventor: STICH, Ulrich, 87662 Blonhofen (DE)
(74) Representative: White, Andrew Gordon
(86) International application number: PCT/EP2012/070474
(87) International publication number: WO 2013/087260

(56) References cited:
- EP-A1- 1 982 854
- DE-C1- 3 839 506
- DE-C1- 3 839 522
- FR-A1- 2 180 093
- GB-A- 2 217 169
- GB-A- 2 247 148

## Description

This invention relates to a link holder on a vehicle or machine. More specifically, this invention relates to a top link holder on a vehicle or machine.

Vehicles or machines such as agricultural tractors are provided with hitch devices to enable an implement to be attached to them.

On an agricultural tractor, for example, a top link holder is provided which can facilitate the handling of a top link of a three-point-hitch device on the rear of a tractor. The top link is pivotally attached to the tractor to allow movement about a horizontal axis. Movement about a vertical axis may also be possible. If the top link is not in use a top link holder holds the top link in a parking position which is a substantially vertical position so that it cannot move about the vertical or horizontal axis. If the operator has to couple the top link to an implement, the top link is released from the holder and the top link is pulled downwards to a coupling point of the implement. The top link is heavy and if the operator drops the top link during coupling the link can cause damage to the operator or a part of the tractor, or be damaged itself.

Typically, top link holders comprise a crude metal rod fixed to a part of the tractor and which extends in a substantially vertical direction. The rod is provided with a simple securing mechanism to secure the top link to the rod in the parking position. The securing mechanism may be a hook for example. To release the top link, the securing mechanism is released and the operator pulls and supports the top link to lower it safely. Other known top link holders comprise a metal rod which is movably fixed to the tractor and is provided with a ball element and the hook of the top link can be attached to hold the top link in the parking position. EP1982854 discloses another example of a link holder.

It is an aim of the present invention to provide an improved link holder which improves the safety and ease of moving an extendible link.

According to the invention there is provided a link holder for controlling movement of an extendible pivotable link on a vehicle or machine, said holder comprising a first elongated element and a second elongated element which are moveably connected together at each end, wherein a free end of the first elongated element is attachable to the vehicle or machine and a free end of the second element is pivotally attachable to the link, said holder further comprising a connecting element which connects an extendible part of the link to the second element, wherein the link is pivotally raised by extending the link and pivotally lowered by retracting the link.

In this way the link is automatically pivoted to a parking position upon extension of the extendible part of the link. By parking position it is meant a link storage position for when the top link is not in use in which the link is secured in a substantially vertical position. Preferably, the link holder is attached to a rail on the vehicle or machine. The rail is preferably formed so that the first element can pivot about a fixed point in the rail and (if necessary) can move linearly along the rail. The link holder may be provided with serrated edges to engage with a protrusion on the first element. This way the link can be held at a desired position and if the operator removes the connecting element from the extendible part of the link, the link will not drop to the ground but be held within the serrations. The connecting element is preferably a link indication rod associated with the link. More preferably, the link is moved into a parking position by extending the link.

The link is preferably a top link. More preferably, the vehicle is an agricultural tractor.

The invention will now be described, by way of example only, with reference to the following drawings in which:
- Figure 1: is side view of a link holder in accordance with the invention,
- Figure 2: is side view of the link holder of figure 1 in a parking position, and
- Figure 3: is a perspective view of the link holder of figure 1.

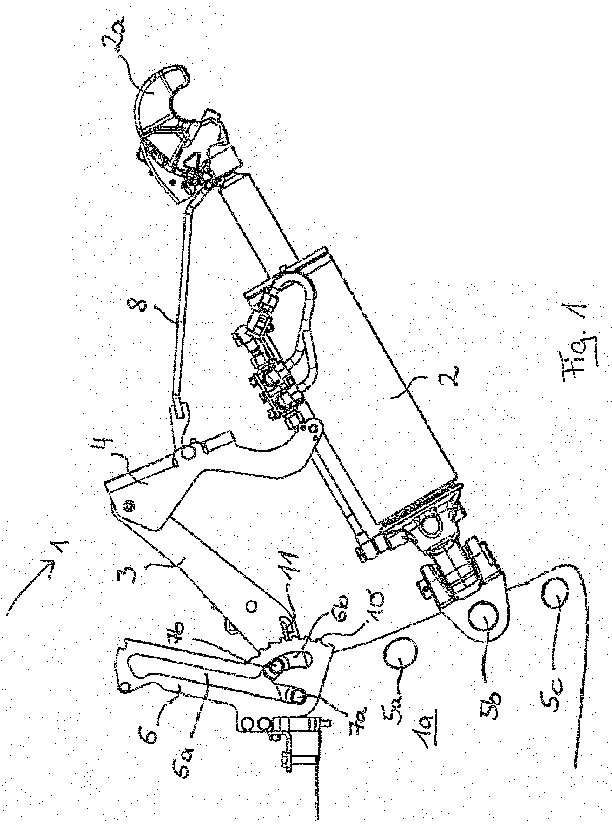

In figure 1 a link holder 1 is shown which is attached to a link 2. The link 2 is an extendible link on a machine or vehicle, such as a top link which is mounted on the rear of an agricultural tractor 1a. The link is provided with a hook 2a which can be extended or retracted. The link 2 is pivotably attached to the vehicle, or machine at pivot point 5b. The tractor 1a is provided with two other pivot points 5a and 5c to attach the top link to the tractor at different heights. The holder 1 comprises a first elongated element 3 and a second elongated element 4 which are moveably connected together at each end. The free end of the second element 4 is pivotably attached to the link 2 and the free end of the first element 3 is moveably connected to the tractor by way of a rail 6. The first element 3 is provided with two guiding elements 7a, 7b which slide within the rail 6. Rail 6 comprises two parallel plates having cut out portions. Each of the plates has a linear portion 6a and a curved portion 6b which allows both linear movement and pivotal movement of the first element 3. The outer edges of curved portions 6b are serrated 10, so that a notch, or notches 11 located on the first element 3 can engage with the serrations to as a safety feature to prevent the link falling. The link 2 is provided with a link indication rod 8 (as is common with extendible links) which shows the operator at a glance how much the link 2 is extended.

Depending on the pivot point 5a, 5b, 5c to which the top link is attached, link 2 may be partly extended so that the link indication rod 8 can be attached to the second element 4 as shown in figure 1. If the link is attached to a different pivot point it is possible to connect the extendible part of the top link to the second element when in a fully retracted position. The position of link 2 in figure 1 is somewhere between the parking position in which the link is in a substantially vertical position and a coupling position in which the link is in a substantially horizontal position for attachment to a trailer, or implement.

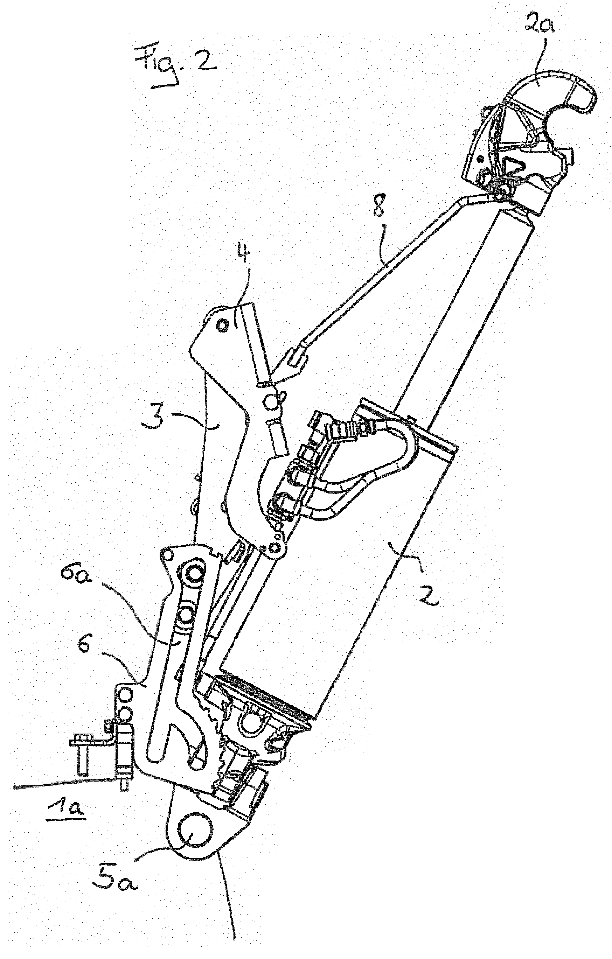

To move the link 2 from a coupling position to the parking position, the link is decoupled from the trailer or implement and the link indication rod 8 attached to the second element 4. As link 2 is extended a force is exerted on the second element 4 causing it to move towards first element 3 and causing first element 3 to pivot anti clockwise about guiding element 7a and for link 2 pivot anti clockwise about pivot point 5b. First element 3 moves upward in the curved portion 6b of the rail 6 and lifts the link indication rod 8 and thus the link 2. Since link 2 is pivotably attached to the tractor, first element 3 initially pivots about guiding element 7a in rail 6 as guiding element 7b moves along the curved portion 6b. As first element 3 moves, second element 4 also moves and thus lifts link 2. If the link is coupled to the tractor on pivot point 5a or 5b the first element 3 is pivoted until guiding element 7b is positioned above guiding element 7a, the first element 3 slides vertically upwards along linear portion 6a of rail 6 to bring the link 2 to the parking position. The distance the first element slides up the linear portion will depend on the amount that the link 2 is extended. If the link 2 is coupled to the tractor on pivot point 5c and it is necessary to bring the link 2 to the parking position, the first element 3 slides within the curved portion 6b of the rail 6 and does not need to slide within the linear part 6a. Figure 2 shows the link 2 attached to the tractor by pivot point 5a in the parking position in which the link is in the fully extended position. In order for the link 2 to be in the parking position, first element 3 slides to the upper end of the rail 6. If the link was less extended, the first element 3 would not be able to slide to the upper end of the rail 6 and thus in the parking position, the link would be at a greater angle to the vertical than that of the position shown in figure 2.

To move from the parking position to the coupling position, the rod is attached to the link and the notch or notches 11 on the first element 3 must be released with the serrations on rail 6 then the operator can retract the link 2 and thereby the link moves automatically to the coupling position. If necessary the link 2 can be stored in a desired height by latching the notch or notches 11 with serrations on rail 6.

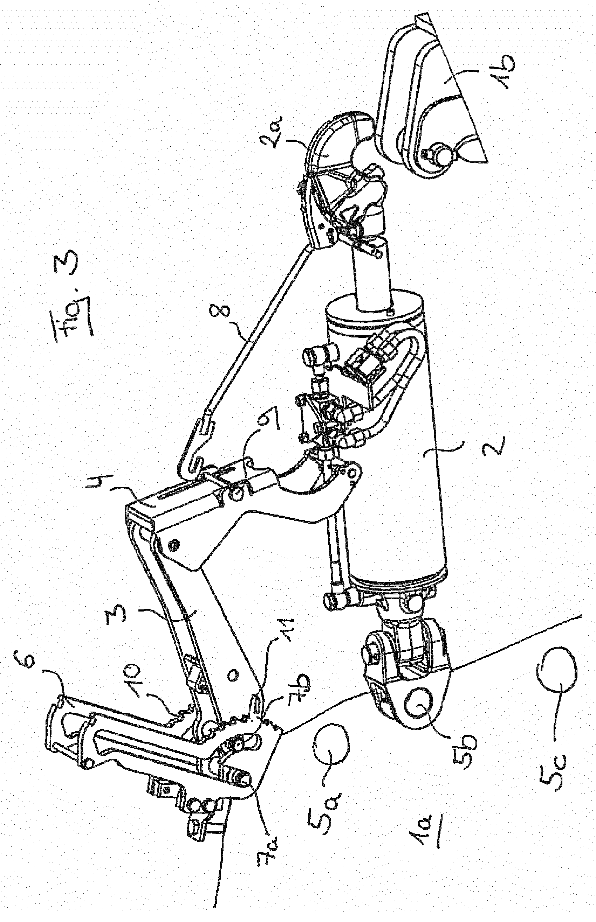

Figure 3 is a perspective view from above of the holder 1. The link 2 is in a coupling position ready for connection to a trailer or implement 1b. The link indication rod 8 is disconnected from the second element 4. For link 2 to be held in that position it is necessary that the notch or notches 11 on the first element 3 are engaged with the serrations 10 on rail 6. The second element 4 comprises two parallel plates which are attached to the link 2 by a pivot pin. Link indication rod 8 is provided with a hook at one end which is connectable to a cross bar 9 on the second element 4. The other end of the rod is pivotably attached to the link 2 and held in place with a fixing pin. When not connected to the second element 4, the link indication rod 8 can be pivoted and stored parallel to the link 2 out of the way.

To move the link from the parking position shown in figure 2 to the coupling position shown in figure 3, link 2 is retracted and gravity acts to pivot the link downwards and in doing so pulls second element 4 away from the first element 3.

## Claims

1. A link holder (1) for controlling movement of an extendible pivotable link (2) on a vehicle or machine, said holder (1) comprising a first elongated element (3) and a second elongated element (4) which are moveably connected together at each end, **characterised in that** a free end of the first elongated element (3) is attachable to the vehicle or machine and a free end of the second element (4) is pivotably attachable to the link (2), said holder (1) further comprising a connecting element (8) which connects an extendible part of the link (2) to the second element (4), wherein the link (2) is privotally raised by extending the link (2) and pivotally lowered by retracting the link (2).

2. A link holder (1) as claimed in claim 1 where the link (2) is pivotable to a generally upright position.

3. A link holder (1) as claimed in claim 1 or claim 2 wherein the first element (3) is attached to a rail (6) on the vehicle or machine.

4. A link holder (1) as claimed in claim 3 wherein the rail (6) allows linear and/or pivotal movement of the first element (3).

5. A link holder (1) as claimed in claim 3 or claim 4 wherein the rail (6) is provided with serrated edges (10) to engage with a protrusion (11) on the first element (3) to secure the link (2) at a desired position.

6. A link holder (1) as claimed in any preceding claim wherein the connecting element (8) is a link indication rod.

7. A link holder (1) as claimed in any preceding claim for use on an agricultural tractor.

8. A link holder (1) as claimed in any preceding claim for a top link.

## Patentansprüche

1. Lenkerhalter (1) zum Steuern/Regeln der Bewegung eines ausziehbaren schwenkbaren Lenkers (2) an einem Fahrzeug oder einer Maschine, wobei der Halter (1) ein erstes langgestrecktes Element (3) und ein zweites langgestrecktes Element (4) aufweist, die an ihren Enden beweglich miteinander verbunden sind, **dadurch gekennzeichnet, dass** ein freies Ende des ersten langgestreckten Elements (3) an dem Fahrzeug oder der Maschine befestigbar ist und ein freies Ende des zweiten Elements (4) schwenkbar an dem Lenker (2) befestigbar ist, wobei der Halter (1) weiterhin ein Verbindungselement (8) aufweist, das einen ausziehbaren Teil des Lenkers (2) mit dem zweiten Element (4) verbindet, wobei der Lenker (2) durch ein Ausziehen des Lenkers (2) verschwenkend angehoben und durch ein Einziehen des Lenkers (2) verschwenkend abgesenkt wird.

2. Lenkerhalter (1) nach Anspruch 1, wobei der Lenker (2) um eine im Wesentlichen aufrechte Position verschwenkbar ist.

3. Lenkerhalter (1) nach Anspruch 1 oder 2, wobei das erste Element (3) an einer Schiene (6) an dem Fahrzeug oder der Maschine befestigt ist.

4. Lenkerhalter (1) nach Anspruch 3, wobei die Schiene (6) eine lineare Bewegung und/oder Schwenkbewegung des ersten Elements (3) gestattet.

5. Lenkerhalter (1) nach Anspruch 3 oder 4, wobei die Schiene (6) mit verzahnten Kanten (10) versehen ist, um an einem Vorsprung (11) an dem ersten Element (3) anzugreifen, um den Lenker (2) in der gewünschten Position zu sichern.

6. Lenkerhalter (1) nach einem der vorhergehenden Ansprüche, wobei das Verbindungselement (8) ein Lenkeranzeigestab ist.

7. Lenkerhalter (1) nach einem der vorhergehenden Ansprüche zur Benutzung an einem landwirtschaftlichen Traktor.

8. Lenkerhalter (1) nach einem der vorhergehenden Ansprüche für einen Oberlenker.

## Revendications

1. Support de biellette (1) destiné à commander le mouvement d'une biellette extensible pouvant pivoter (2) sur un véhicule ou une machine, ledit support (1) comprenant :
un premier élément allongé (3) et un second élément allongé (4) qui sont reliés de manière à pouvoir se déplacer ensemble à chaque extrémité, **caractérisé en ce qu'**une extrémité libre du premier élément allongé (3) peut être fixée sur le véhicule ou la machine et une extrémité libre du second élément (4) peut être fixée de manière à pouvoir pivoter sur la biellette (2), ledit support (1) comprenant en outre un élément de liaison (8) qui relie une partie extensible de la biellette (2) au second élément (4), dans lequel la biellette (2) est soulevée de manière à pouvoir pivoter par extension de la biellette (2) et abaissée de manière à pouvoir pivoter par rétraction de la biellette (2).

2. Support de biellette (1) selon la revendication 1, dans lequel la biellette (2) peut pivoter vers une position sensiblement verticale.

3. Support de biellette (1) selon la revendication 1 ou 2, dans lequel le premier élément (3) est fixé sur un rail (6) sur le véhicule ou machine.

4. Support de biellette (1) selon la revendication 3, dans lequel le rail (6) permet un mouvement linéaire et/ou pivotant du premier élément (3).

5. Support de biellette (1) selon la revendication 3 ou 4, dans lequel le rail (6) comporte des bords dentelés (10) destinés à être couplés à une saillie (11) sur le premier élément (3) afin de maintenir la biellette (2) à une position désirée.

6. Support de biellette (1) selon l'une quelconque des revendications précédentes, dans lequel l'élément de liaison (8) est une tige indicatrice de liaison.

7. Support de biellette (1) selon l'une quelconque des revendications précédentes, destiné à être utilisé sur un tracteur agricole.

8. Support de biellette (1) selon l'une quelconque des revendications précédentes, destiné à une biellette supérieure.
